(19) Europäisches Patentamt
European Patent Office
Office européen des brevets

(11) **EP 1 678 659 B1**

(12) **EUROPEAN PATENT SPECIFICATION**

(45) Date of publication and mention
of the grant of the patent:
**15.08.2007 Bulletin 2007/33**

(51) Int Cl.:
***G06K 9/50*** *(2006.01)*

(21) Application number: **04770230.3**

(22) Date of filing: **12.10.2004**

(86) International application number:
**PCT/IB2004/052059**

(87) International publication number:
**WO 2005/038699 (28.04.2005 Gazette 2005/17)**

(54) **METHOD AND IMAGE PROCESSING DEVICE FOR ANALYZING AN OBJECT CONTOUR IMAGE, METHOD AND IMAGE PROCESSING DEVICE FOR DETECTING AN OBJECT, INDUSTRIAL VISION APPARATUS, SMART CAMERA, IMAGE DISPLAY, SECURITY SYSTEM, AND COMPUTER PROGRAM PRODUCT**

VERFAHREN UND BILDVERARBEITUNGSEINRICHTUNG ZUR ANALYSE EINES OBJEKTKONTURBILDES, VERFAHREN UND BILDVERARBEITUNGSEINRICHTUNG ZUR ERKENNUNG EINES OBJEKTS, VORRICHTUNG FÜR INDUSTRIELLES SEHEN, INTELLIGENTE KAMERA, BILDANZEIGE, SICHERHEITSSYSTEM UND COMPUTERPROGRAMMPRODUKT

PROCEDE ET APPAREIL D'ANALYSE DE L'IMAGE DU CONTOUR D'UN OBJET, PROCEDE ET APPAREIL DE DETECTION D'UN OBJET, APPAREIL DE TRAITEMENT INDUSTRIEL D'IMAGES, CAMERA INTELLIGENTE, AFFICHEUR D'IMAGES, SYSTEME DE SECURITE ET PRODUIT LOGICIEL

(84) Designated Contracting States:
**AT BE BG CH CY CZ DE DK EE ES FI FR GB GR HU IE IT LI LU MC NL PL PT RO SE SI SK TR**

(30) Priority: **17.10.2003 EP 03103847**

(43) Date of publication of application:
**12.07.2006 Bulletin 2006/28**

(73) Proprietor: **Koninklijke Philips Electronics N.V.
5621 BA Eindhoven (NL)**

(72) Inventors:
• **VAN LIER, Antonius, J., M.**
**NL-5656 AA Eindhoven (NL)**
• **LIU, Hong**
**NL-5656 AA Eindhoven (NL)**
• **NICOLESCU, Cristina**
**NL-5656 AA Eindhoven (NL)**
• **VAN LEEUWEN, Marinus, B.**
**NL-5656 AA Eindhoven (NL)**

(74) Representative: **Groenendaal, Antonius W. M.
Philips
Intellectual Property & Standards
P.O. Box 220
5600 AE Eindhoven (NL)**

(56) References cited:
**US-A- 4 155 072          US-B1- 6 320 984**

• **MARSHALL S: "Review of shape coding techniques" IMAGE AND VISION COMPUTING, UK, vol. 7, no. 4, November 1989 (1989-11), pages 281-294, XP002272602 ISSN: 0262-8856**

**Description**

The invention relates to a method for analyzing a contour image.

The invention also relates to a method for detecting an object in an image.

The invention also relates to an image processing device for analyzing an object contour image.

The invention also relates to an image processing device for detecting an object in an image.

The invention also relates to an industrial vision apparatus comprising one or more of said image processing devices.

The invention also relates to a smart camera comprising one or more of said image processing devices.

The invention also relates to an image display comprising one or more of said image processing devices.

The invention also relates to a security system comprising said industrial vision apparatus.

The invention also relates to a computer program product comprising code enabling a processor to execute at least one of said methods.

In prior art, methods exist for analyzing images, more in particular with the purpose of detecting objects in these images. E.g. in a production line faulty constructed products may have to be rerouted towards a manual repair unit instead of continuing along the main line, which may have to be done automatically by analyzing camera captured images. Objects may be detected by correlating a captured image with a grey value pixel template. A disadvantage of these grey value correlation methods is that they often produce incorrect detection results due to e.g. lighting effects, and in particular highlights. Other object detection methods, designed to overcome these problems, detect objects on the basis of object contours. If a contour is sufficiently characteristic in shape, and a large enough part is not occluded, these methods work well. Typically the captured image is converted into a contour image, by applying such operations as edge detection. The contour may then be cast into a representation (e.g. a multiscale contour curvature representation) and analyzed. The straightforward way to detect a contour, is to match the pixels of the contour image supposedly lying on a contour of the object searched for, with pixels in a template contour window, by using a match function. If a large number of pixels in the contour image lie on the template contour locus, the match function yields a high value, indicating that a template contour has been found. All values below a predetermined acceptance threshold are indications that there is likely no object of the desired type at the present location in the contour image being tested.

It is a disadvantage of these prior art object detection methods based on matching object contours that for substantially each pixel in the contour image the presence of each of the templates has to be verified by matching. Even if only one object is searched for, but the object may e.g. occur at ten different orientations and ten different scales, this means that for each pixel in the contour image (which may in an industrial vision application contain e.g. 4000x3000 pixels) hundreds of templates have to be matched. If the match function adds the absolute values of the difference of the pixel in the template and the contour image, and the template contour window contains e.g. 5000 relevant pixels (as is not atypical for well imaged object contours which take up a large portion of the contour image), each of these hundred template matchings requires 5000 subtraction operations. This makes object detection based on contour matching a rather slow method, and hence a number of real time applications are out of reach. In the future when industrial vision systems become more versatile, e.g. used in,a robotic apparatus which has to find its way among the many objects in a typical home, they may have to check for several objects at the same time.

US Patent No. 4,155,072 describes a character recognition method wherein the starting and ending positions of characters along scan lines are detected and compared to those of standard characters. These pixel positions are stored in a table.

It is an object of the present invention to provide a method of analyzing a contour image for object detection, which is relatively fast.

This object is realized in that the method of analyzing a contour image according to claim 1 and corresponding device according to claim 7.

A method used for object detection cannot avoid checking the entire contour image for the presence of a desired object. If even a small part of the contour image is left unchecked, the situation could occur that the desired object was precisely situated in this part, and hence all performed operations are performed in vain. The method can be optimized so that it performs as little irrelevant work as possible however. One insight on which the invention is based is that if a region does not contain enough pixels in relation to the number of pixels on the template contour, further costly verification by matching can be avoided. Furthermore, due to the continuous nature of images possibly a number of match positions can be skipped, since it may take a number of rows (or columns) to arrive at the required amount of pixels. However, analyzing regions of the contour image for the precise structure and amount of contour pixels may introduce further costly operations, which number of operations is preferably kept low in the method according to the invention. The method of analyzing an object contour image according to the invention, which is designed for being used in an object detection method, constructs a simple data structure of tables, which allows a quick count of contour pixels, or in general pixels of interest (e.g. by means of a distance transform on the contour image further pixels may be generated).

Therefore a scan path is introduced in the window, e.g. a zig-zag diagonal scan, or along a Hilbert fractal, or from top to bottom and left to right. The scan path is such that substantially all pixel positions in the contour image are analyzed in corresponding regions of interest. In case only part of an image captured by a camera can contain desired objects, this part can be called the contour image. In the first table all non-zero (contour pixels or in general interesting pixels) pixels are contained and given at least one coordinate. Note that no particular importance should be attributed to the term "non-zero", since this reflects only the most straightforward realization of the method according to the invention, making the method easier to describe more clearly. In general non-zero should be read as not equal to a predetermined first value, to cover e.g. a trivial modification in which to all values of the contour image a constant value, e.g. three, is added.

E.g. if an image is scanned row-wise, as in a television system, there exists a one-dimensional natural ordering of all pixels, hence e.g. an x-coordinate is sufficient (of course the y-coordinate could be used equally well, which corresponds to an a priori 90 degree rotation of the contour image), provided that all rows are taken into account (which in an embodiment of the method is done by inserting a "not a number (NaN)" code if there are no non zero pixels on a row).

Making tables of indices of the first and last non-zero pixels on at least all parallel lines traversing the region of interest (corresponding to the size of a template contour window for matching) makes counting pixels easy. A region of interest may be constructed from lines having an orientation 45 downwards sloping, e.g. the first line then traverses the region of interest on only 1 pixel, the second on two pixels, etc. The scan direction may e.g. be left-top to right-bottom. The first encountered non-zero pixel may e.g. be the second one on the 5th line, and the last one may be the fifth. By using indices in the first table rather than pixel coordinates, counting can be done fast. This is more easily understandable if the region of interest is divided in horizontal rows. The first pixel may then be on pixel 3 of a row, and the last pixel on pixel 10. Merely subtracting 3 from 10 does not give a reliable indication that there are 8 non-zero pixels on this row, for there may be zeroes in between. Subtracting indices of entries in the first table (containing only all non-zero pixels) does give the amount of pixels on that row. By summing all row counts the total amount of pixels within the region of interest is obtained. The fourth and fifth tables provide the first and last pixels respectively to obtain the partial counts on all traversing lines casu quo rows. The position of a region of interest is in the remainder of this text interpreted as the (x,y)-coordinates of its top-left pixel, although it may be otherwise defined, e.g. the coordinates of a center pixel.

An embodiment of the method of analyzing a contour image comprises:

- specifying the scan path as consecutive positions running downwards along a column and subsequently jumping towards the next column;
- constructing the first table containing for each pixel in the contour image of non-zero value at least one position coordinate;
- constructing the fourth table containing at least for each horizontal line of pixels traversing the region of interest, an index of an entry in the first table, of the leftmost non zero pixel of the contour image lying on the respective horizontal line and being inside the region of interest ; and
- constructing the fifth table containing at least for each horizontal line of pixels traversing the region of interest, an index of an entry in the first table, of the rightmost non zero pixel of the contour image lying on the respective horizontal line and being inside the region of interest.

As already explained above, scanning the contour image in a television-like way, e.g. downwards on consecutive columns, is a conceptually simple way to make sure that the entire contour image is processed. Furthermore, the table processing is simple. In some applications other scan paths may be desirable however, e.g. scanning an image rightwards per row and then jumping top the next row is compatible with current television scan standards, and hence can be advantageous for real-time processing of such incoming television signals.

A further embodiment of the method of analyzing a contour image comprises:

- constructing a second table containing for substantially each horizontal line of the contour image an index of an entry in the first table, of the leftmost non zero pixel on the respective horizontal line of the contour image;
- constructing a third table containing for substantially each horizontal line of the contour image an index of an entry in the first table, of the rightmost non zero pixel on the respective horizontal line of the contour image; and
- constructing the fourth table and the fifth table on the basis of the first table, the second table and the third table.

If a scan is performed along consecutive columns as described above, a further speed optimization may be realized. Instead of calculating a new fourth and fifth tables for each (vertical) position of the region of interest (in case these columns contain only the leftmost and rightmost points within the current regions of interest), the fourth and fifth tables are calculated once for each consecutive column scan, i.e. for all rows in the present column position. Furthermore, they can be easily obtained form a second and third table containing the leftmost and rightmost pixels for each row of the entire contour image.

A method of detecting an object in a contour image may make good use of the analyzing methods, if it further comprises:

- calculating for consecutive positions along the scan path a count of a number of non zero pixels inside the region of interest, on the basis of the fourth table and the fifth table; and
- evaluating a match function for obtaining an indication of a match between a template contour and the pixels of the contour image present in the region of interest, taking as arguments pixels in the region of interest and pixels in a template contour window if the count is greater than or equal to a predetermined pixel amount; or
- performing a jump to a further position along the scan path if the count is smaller than a predetermined pixel amount.

As explained above, regions with too little contour points need not be taken into account, i.e. a costly match can be avoided by jumping towards a consecutive position. With consecutive positions is not meant positions which coordinate along the scan path differs necessarily by one. They are positions further along the scan line, and may lay a jump of three coordinates further.

A further image processing speed increase may be achieved with an embodiment of the method of detecting an object in a contour image for which the template contour to be verified is a geometrical transformation of a template contour in the template contour window, comprising:

- fetching for a pixel of the template contour window a corresponding pixel in the contour image, at a position which is determined by the position of the pixel of the template contour window and the geometrical transformation; and
- evaluating the match function on the basis of the similarity between the pixel of the template contour window and the corresponding pixel.

Only a subset of the contours needs to be verified, and further refinement matching (for obtaining e.g. the exact orientation angle of an object) may be done if required in the application.

The method of detecting an object may be applied on an image directly obtained from e.g. a camera by prior to the analysis of the contour image applying a contour detection to the image to obtain the contour image.

It is a second object of the invention to provide an image processing device for analyzing an object contour image for object detection, which is relatively fast.

The image processing device comprises:

- a first unit arranged to specify a position on scan path in the contour image of a region of interest; and
- a second unit arranged to construct and store in a memory:

   a) a first table containing for each pixel in the contour image of non-zero value at least one position coordinate,
   b) a fourth table containing at least for each parallel line of pixels traversing the region of interest, an index of an entry in the first table, of, given a scan direction, the first non zero pixel of the contour image lying on the respective parallel line and being inside the region of interest, and
   c) a fifth table containing at least for each parallel line of pixels traversing the region of interest, an index of an entry in the first table, of, given a scan direction, the last non zero pixel of the contour image lying on the respective parallel line and being inside the region of interest.

This image processing device may be comprised in an image processing device for detecting an object in the contour image further comprising:

- a matching unit arranged to evaluate a match function taking as arguments pixels in a region of interest and pixels in a template contour window; and
- a decision unit, arranged to calculate a count of a number of non zero pixels inside the region of interest, on the basis of the fourth table and the fifth table, arranged to instruct the first unit to jump to a further position along the scan path if the count is smaller than a predetermined pixel amount, and arranged to instruct the matching unit to evaluate the match function for the current region of interest if the count is greater than or equal to the predetermined pixel amount.

Either image processing device may be comprised in an industrial vision apparatus further comprising:

- a contour generation unit arranged to generate the contour image from an image receivable from a camera; and
- a control unit, arranged to output a signal in dependence on a result of the match function.

Either image processing device may be comprised in a smart camera further comprising:

- a contour generation unit arranged to generate the contour image from an image captured by the camera; and

- an image treatment unit, arranged to apply an image transformation to a region of the image captured by the camera, determined on the basis of an object detected by the image processing device.

Either image processing device may be comprised in an image display further comprising:

- a contour generation unit arranged to generate the contour image from an image received by the image display; and
- an image treatment unit, arranged to apply an image transformation to a region of the received image, determined on the basis of an object detected by the image processing device.

These and other aspects of the methods and image processing devices according to the invention will be apparent from and elucidated with reference to the implementations and embodiments described hereinafter, and with reference to the accompanying drawings, which serve merely as non-limiting illustrations.

In the drawings :

Fig. 1a schematically shows a simplistic contour image;
Fig. 1b schematically shows tables of interesting pixels according to the invention;
Fig. 2 schematically shows a template contour window;
Fig. 3a schematically shows scanning of a region of interest along a contour image;
Fig. 3b schematically shows further tables according to the invention;
Fig. 3c schematically shows a pixel count for the position of the region of interest shown in Fig. 3a;
Fig. 4 schematically shows a contour image with values other than zero or one;
Fig. 5 schematically shows offsets for fetching corresponding pixels in the contour image when matching a template which is related to a reference template through a rotation;
Fig. 6 schematically shows a template contour; and
Fig. 7 schematically shows the image processing device in an example application.

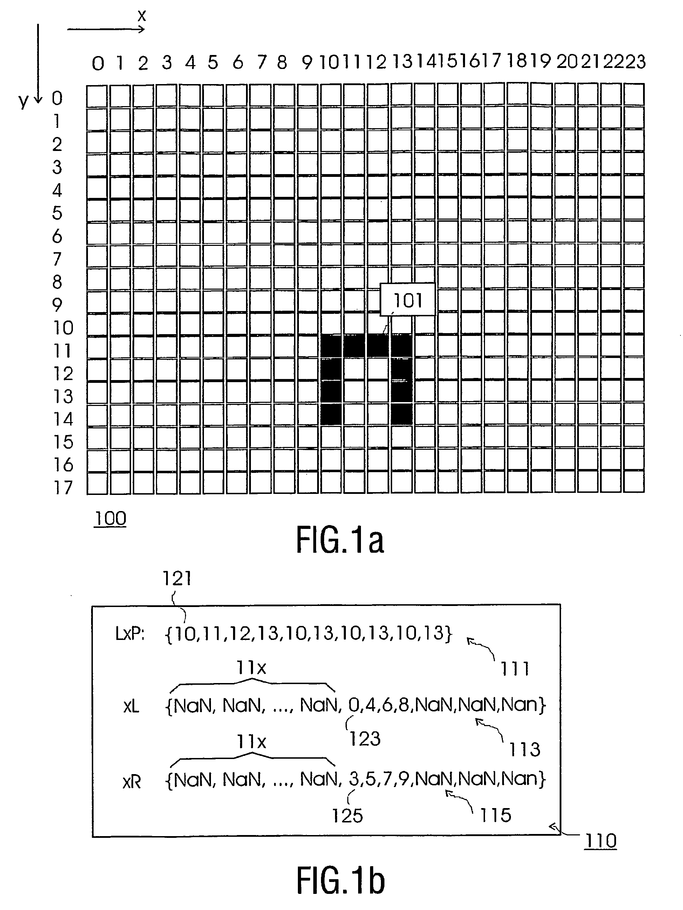

Fig. 1 shows a simplistic contour image 100 for illustration purposes, in which object contour pixels of an object contour 101 have an exemplary value of 1 (shown as black squares), and non contour pixels have a value zero (shown as white squares).

To obtain contour pixels from a grey value image (e.g. as obtained from a camera), typically a first operation applied on the grey value image is edge detection. A typical edge detector known from prior art is the Canny edge detector, which convolutes the grey value image with a discretized matrix version of the following edge detector Kernel $K(x)$:

$$K(x) = d/dx(G(x)) \qquad \text{[Eq. 1].}$$

$x$ is a relative pixel coordinate in the horizontal direction, and G is a Gaussian smoothing function. Other typical edge detection filters may be applied such as e.g. Prewitt, Deriche, Kirsch, Marr, etc. The Kernel of Eq. 1 only detects edges in the horizontal direction, but numerous techniques exist in prior art to take into account the vertical direction also (e.g. combining the results of a horizontal and vertical edge detection, or using a Kernel or set of Kernels sensitive to both directions).

The result of the convolution of the grey value image with the edge detection Kernel is a second grey value image, in which edges have large pixel grey values (e.g. 255) and non-edges (e.g. smooth interiors of objects) have small pixel grey values (e.g. 0). A typical second step of the edge detection is either clipping or maximum finding. Clipping sets all grey values above a predetermined value (e.g. 128) equal to 1 and all other values equal to 0. Since single pixel width contours are desired, the preferred second step is maximum finding, which only sets the maxima of edge ridges in the second grey value image to 1 and all the other pixels to 0.

Further steps towards obtaining a contour for analysis may be edge linking, spurious edge pruning and gap closing. Finally the edge may be represented by a particular model, e.g. a polygon of straight lines may be fitted, or the contour may be represented as a function of an angle of a tangent against an arc position along the contour. Contours may then be matched e.g. by comparing a curvature signature of the image object contour with a model signature corresponding to a typical shape for an object to be detected, as obtained e.g. from a training stage.

Object contours may be obtained also on the basis of color information, texture information, etc., e.g. by means of the edge detector described in "M. Mertens, H. Sahli and J. Cornelis: A robust nonlinear segment-edge finder. Proc. of the 1997 IEEE Workshop on Nonlinear Signal and Image Processing." Note that although the method according to the invention is described with an example image in 2D, the method may be applied on a one-dimensional, three-dimensional, or higher-dimensional (>3) image as well.

Given the contour image 100, a typical prior art contour matching method has to check whether the pixels of the object contour in the contour image 100 match the pixels in the pixels of a template contour, having a shape which is to be found in the contour image 100. The template contour is typically a small cut out image of the desired contour, i.e. e.g. for the object contour 101 in the contour image 100, the template contour may be a 4x4 window containing the drawn "inverted U" shape.

This 4x4 window is shifted over the contour image 100 in every possible pixel position (e.g. the leftmost pixel of the template contour window overlapping with a pixel (x,y) of the contour image 100), and a match function is calculated, e.g.:

$$M(x, y) = \sum_{i=0}^{I} \sum_{j=0}^{J} [t(i, j) - p(x + i, y + j)]^2 / N \qquad \text{[Eq. 2],}$$

in which i and j are the running coordinates in the contour template window, running e.g. from 0 to I resp. 0 to J (I and J being in the example of Fig. 1 equal to 4), x and y are coordinates in the contour image 100 indication the position where the match occurs, t is the pixel value of the contour template window at position (i,j), p is the pixel value in the contour image 100, and N is a normalization constant. Other match functions may be used, e.g. equating the absolute difference, or a Boolean match function such as:

$$M_2(x, y) = \sum_{i=0}^{I} \sum_{j=0}^{J} [t(i, j) p(x + i, y + j)] / N \qquad \text{[Eq. 3],}$$

in which the multiplication results in an additional count if both the template and the image have a pixel with value 1 in a particular position.

The match value M is maximal i.e. a high value (equal to 1 if properly normalized) if all pixels match, zero if no pixels match, and of an intermediate value if some pixels match. The latter condition may occur if the template pattern is positioned in the vicinity of the image contour, but not properly aligned, or if a match with a different shape is attempted. In a real computer vision application, the contour image 100 typically does not contain all pixels in their correct positions due to imaging artifacts, noise, etc., rather typical occurring problems are:

1) some contour pixels are missing
2) there are extra so-called spurious contour points
3) contour points are slightly offset from their theoretical position, e.g. due to the edge detector used.

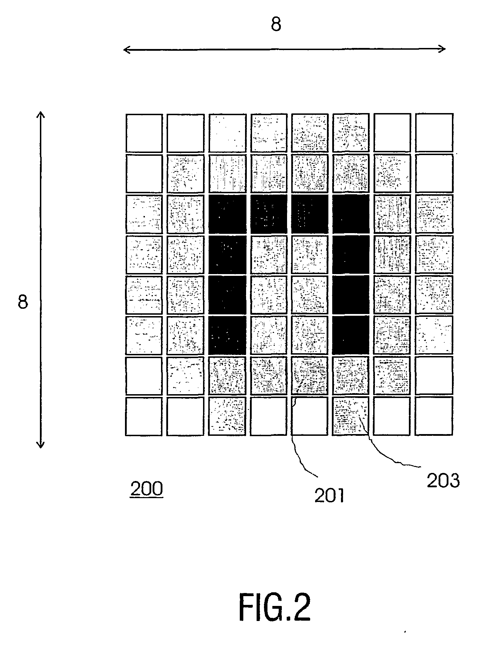

Therefore to improve the matching method, typically a smooth template contour window 200 is used as shown in Fig. 2. Such a window has intermediate values (between 0 and 1, or if everything is rescaled to 8 bit representation between 0 and 255), on a profile around the template contour, which typically decreases monotonously from the maximal value (e.g. 1) at the exact theoretical template contour positions towards zero outwards.

Such a smooth template contour window 200 can be obtained by applying a distance transformation to the template contour window containing the theoretical binary template. E.g. in Fig. 2, pixels are given a value of 50% of the maximum value if their Manhattan distance $|(i - a)| + |(j - b)|$ (in which a and b are the coordinates of the nearest binary template pixel) is 1, and a value of 20% if their distance from a binary template pixel is 2. A good profile to use is a Gaussian profile. Using such a smooth template contour window 200 is especially advantageous for slightly misaligned contour pixels as mentioned above under point -3). The match function may be Eq. 2, or another match function taking reals or integers as arguments. There maybe other reasons for using a template contour window with values other than zero or one. E.g. if the template models a line segment of three (grey value = 1) pixels in a row (and zeroes on either side), then matching criterion Eq. 3, just checks the presence of such a structure. If there is a horizontal line of 10 pixels in the contour image 100, then the three pixel segment will be found everywhere along the image line, i.e. at 10-2 consecutive positions. It maybe required however in an application that only lines of precisely three pixels long are found, which can be realized e.g. by putting -1 values instead of zeroes on either side of the segment of three ones in the template contour window 200, the match function yielding a lower value if the -1 values of the template are matched with 1 values in the image instead of zeroes.

Such prior art object detection methods based on contour matching work well in their applications, but they are very computationally expensive due to the fact that all pixel positions in the contour image 100 have to be checked for the presence of the particular contour (or many possible contours, if e.g. several objects or rotated versions of an object are to be checked simultaneously), and possibly with a complex matching function over a considerable amount of template contour window 200 pixels. Even with today's ever faster computers or ever more powerful ICs, a number of applications are still unfeasible, especially if they have to be done in real time (e.g. automatic detection of postage stamps in the postal distribution center requires a processing of several letters per second to be economically viable) and for large industrial images (typically larger than a television image of 720x576, e.g.10000x8000).

With the contour based object detection method according to the invention, as few operations as possible are performed -while still retaining the full detection capability-, and object detection has to be achieved without incurring too many additional image analysis operations, which increase the algorithmic complexity again.

In a preferred embodiment of the object detection method, as a first operation, for the entire contour image 100, a pixel position structure 110 (Fig. 1b) is constructed containing three tables giving information on interesting pixels in the contour image 100 (in the above example the pixels that have a value 1 obtained from the contour detection):

- a first table 111, containing the x coordinates of non zero pixels;
- a second table 113, containing the indices of the places in the first table of the leftmost pixel in each row of the contour image 100; and
- a third table 115, containing the indices of the places in the first table of the rightmost pixel in each row of the contour image 100.

Hence, to obtain the first table, the contour image 100 is typically scanned from left to right and top to bottom, until a first pixel is encountered. In the example of Fig. 1, this is the pixel at position (10, 11). Its x coordinate, 10, is written at the first place (in the example index 0) of the first table 111. The next encountered pixel is at position (11, 11), leading to a writing of the number 11 at index 1 of the first table 111, and so on.

Subsequently or in parallel, all rows of the image are analyzed to obtain the leftmost and rightmost pixels. The first row of the contour image 100 contains no non zero pixels, hence in both the second table 113 and the third table 115 no valid pixel index can be written, hence a predefined value is written, e.g. "not a number (NaN)". Finally arriving at row 11, the leftmost pixel of the object contour 101 is at position (10,11) and the rightmost pixel of the object contour 101 is at position (13,11). Rather than writing the x coordinates in the second and third table, the indices of the corresponding pixels are filled in. The point (10,11) is the first point in the first table 111, hence index 0 is written at place 123 in the second table 113. The rightmost point is the fourth point, hence index 3 is written at place 125 in the third table 115. Working with indices rather than coordinates leads to the advantage that the number of pixels in a certain row can be obtained by a single subtraction of the leftmost index from the rightmost index. If just the x coordinates were subtracted, this would not take into account zeroes in between.

Subsequently the contour image 100 is scanned with the template contour window 200, however, in the method according to the invention not all pixel positions (x,y) in the contour image 100 are checked for the presence of the desired object contour by evaluating the match function, but rather only relevant candidate regions (regions which may yield a match, i.e. regions that are by preprocessing not definitely excluded as not being able to contain a match) are verified with the match function. The scan is preferably from top to bottom and from left to right. Hence the template contour window 200 is first positioned so that the leftmost pixel of the template contour window 200 overlaps the leftmost pixel of contour window 100 (actually the scan may start partially outside the contour window 100), and a vertical sector 301 of the contour window 100 of, according to the example of Fig. 2, eight columns (along the entire height of the contour image 100) will undergo matching, to check whether the desired contour is present in a position which corresponds to the positioning of the leftmost corner of the template contour window 200 in the contour image 100.

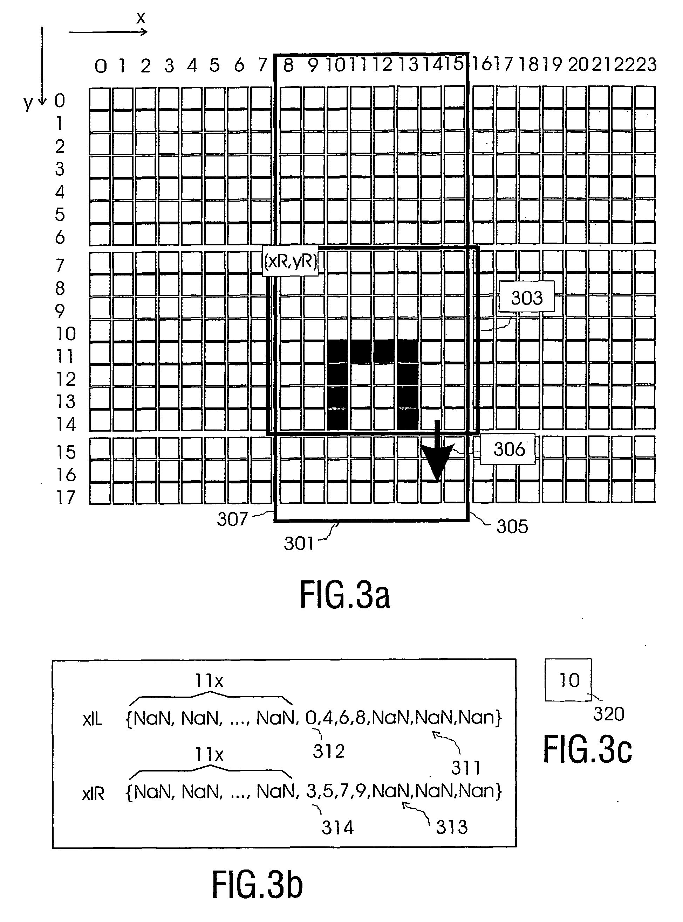

To speed up the matching, the method according to the invention calculates two further tables of the pixel position structure 110, a fourth table 311 (see Fig. 3b), and a fifth table 313. The fourth table 311 contains the indices of the places in the first table 111 of the leftmost pixel, not in an entire contour image 100 line, but within the vertical sector 301. Similarly, the fifth table 313 contains the indices of the places in the first table 111 of the rightmost pixel within the vertical sector 301. Since in the example of Fig. 3a, there is only a single contour, and it falls entirely within the exemplary vertical sector 301, for this horizontal scanning position on the contour window 100 the second and third tables contain exactly the same values as the fourth respectively the fifth tables. If during scanning the right border 305 of the vertical sector 301 is positioned halfway the object contour (i.e. with 5 contour pixels on the right and 5 on the left), the fourth table 311 for this vertical sector 301 is identical to the one shown in Fig. 3b, but the fifth table is {NaN, ..., NaN, 1,4,6,8, NaN, NaN, NaN}, since on row 11 the rightmost pixel is the second pixel encountered, and on the following rows the indices of the rightmost pixels are those of the leftmost pixels, since the vertical sector 301 contains only single contour pixels on those rows.

The fourth table 311 and fifth table 313 can be easily constructed from the tables giving information on the important pixels in the entire image, e.g. the first table 111. The leftmost pixel on a particular row of the vertical sector 301 can be found given the x-coordinate XL of the left border 307 of the vertical sector 301 as the index of the pixel in the first table having the lowest x-value larger than XL. Similarly the rightmost pixel is the index of the pixel having the largest x-value smaller than the x-coordinate XR of the right border 305 of the vertical sector 301.

However the appropriate indices for the fourth and fifth table can be found faster by using the second and the third table. Namely e.g. for row 12 the leftmost pixel index in the second table 113 (for the entire contour image 100) is index 4. Hence the leftmost pixel within the vertical sector 301 can only have an index of 4 or higher, and similarly by looking up the index of row 12 in the third table 115, it can not have an index larger than the rightmost pixel of row 12 in the entire contour image 100, equaling 5. Hence not all entries of the first table have to be checked, but rather at most as many as there are contour pixels on row 12, or another row of interest. Another advantage of using a scan path 306 running downwards along columns of the contour image, is that the fourth and fifth tables can be calculated once for each downward scan, rather than for each position of the region of interest 303.

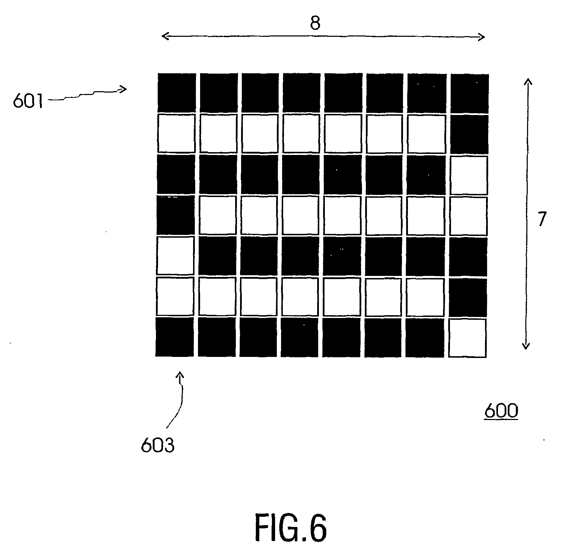

Part of the speed increase of the object detection method according to the invention comes from the possibility to skip the matching in regions in the contour image 100 which are determined by analyzing the content of the tables of the pixel position structure 110. By means of the indices in the fourth table 311 and fifth table 313, the number of pixels for each row can be calculated by simple subtraction of two indices, e.g. for row 11 the fifth table 313 gives an index of the rightmost pixel of 3, and the fourth table 311 gives an index of the rightmost pixel of 0, yielding a total number of pixels within the vertical sector 301 on row 11 equal to 4. Hence the total number of pixels present within a region of interest 303 (being the current position of the template contour window 200 in the contour image 101, for which the match function is evaluated) can be obtained by summing the number of pixels within the vertical sector 301 for each row within the region of interest 303. If there is an object contour matching the template contour present in that part of the contour image 100 corresponding to the region of interest 303, there should be a high percentage of the total required amount of pixels of the contour template present in the region of interest 303. E.g. for the template of Fig. 6, if 20% of undetected contour points are allowed, there should be at least 80% of 32 equaling 26 pixels present in the region of interest 303. The percentage - typically represented as a predetermined pixel amount- may be determined on the basis of a minimal match function value which is still indicative of a contour match, and this minimal match function value is again dependent on such conditions as the amount of noise in the image, the number and shape difference of the template contours which have to be recognized, the maximum allowed percentage of occlusion, etc. Other theoretical analysis typical in image processing may be used to obtain the predetermined pixel amount. Simplifying the explanation of the algorithm by assuming a required percentage equal to 100%, the speed increase of the object detection method according to the invention is explained by means of the sinuous object contour shape 600 of Fig. 6. This contour in the contour image 100, and hence the dominant part of its template (in a binary template all pixels equal to 1, in a smooth distance transformed template typically the pixels with the highest grey value), is composed of 4x8 pixels. Suppose that for a particular vertical position yR of the region of interest 303 there are only 8 pixels inside the region of interest 303. This means that there is a deficit of 3x8 pixels. A first rule to speed up the scanning vertically through the vertical sector 301 states that since there can be at most 8 additional pixels on each next row within the vertical sector 301, the region of interest 303 has to be moved down at least three rows downwards (best case). Of course looking at the shape of the template contour 600, these extra 24 pixels have to lie on particular lines. Simply three rows of 8 pixels in the contour image 100 will not match the contour 600 of Fig. 6. Hence the number of rows for which evaluating the match function can be skipped can be calculated more intelligently. At best, the 8 pixels of the first row 601 of contour 600 are all present on the bottom row of the region of interest 303 positioned at position yR, and below the region of interest 303 is the rest of contour 600 (if the points are positioned otherwise the match function evaluation will indicate that the object contour in the contour image 100 is not the desired template contour 600). Since the pattern continuous for 6 rows below the first row 601, the region of interest 303 has to jump 6 rows to fully overlap with the pattern, aligning the first row 601 with the first row of the region of interest 303.

In generic terms, there are two strategies:

-   either, a count 320 of the total number of pixels in the region of interest 303 is performed for each vertical position yR of the region of interest 303, after which the match function is evaluated if the count is greater then or equal to the predetermined pixel amount for the template(s) to be matched;
-   or a number of rows is skipped simultaneously, depending on the difference between the current count for the current vertical position yR of the region of interest 303 and the predetermined pixel amount (taking into account the width of the vertical sector 301 and/or the shape of the template contour)

For the first strategy, the count of the total number of pixels in the region of interest 303 for a vertical position yR can be obtained fastly from the count for the vertical position yR-1 right above, by adding the new row count, and subtracting the count of the highest row in the previous position of the region of interest 303:

EP 1 678 659 B1

$$C(yR) = C(yR-1) + CL(yR+H-1) - CL(yR-1) \qquad \text{[Eq. 4],}$$

in which the C's indicate the total counts in the entire region of interest 303 for a particular position of its topleft pixel (e.g. yR), the CL's indicate the counts for a single row, and H is the height of the region of interest 303, i.e. the template contour window 200 (600) height.

Of course, if there are many spurious contour pixels, the count may be above the predetermined pixel amount even if no pixels in the part of the contour image 100 within the region of interest 303 lie on the template contour positions. But all regions containing small spurious contours, belonging obviously to different objects than the one to be detected with the template contour, and vast empty regions of the contour image 100 are skipped, instead of the expensive match function being evaluated for them.

A similar reasoning leads to the skipping of a number of columns. E.g. if as in Fig. 3a the first eight columns contain no pixels at all, after finishing the first vertical section 301, the region of interest 303 starts scanning eight pixels further. In general the suggested number of columns to jump depends on the amount of pixels in each row of the current vertical section. E.g. the upper rows may contain no pixels, but lower rows may contain pixels, so that a total count for a particular position of the region of interest 303 may e.g. be 4. These pixels may be positioned in the correct pattern corresponding to the first column 603 of the contour 600 window, suggesting a jump of 7 columns rather than 8. The actual number of columns jumped is the minimum of the suggested number of columns to jump for each vertical position yR of the region of interest 303 (worst case: all not evidently non matching positions have to be verified during the remainder of the scan). But of course empty regions at the top of the contour image 100 which have to be reprocessed because of a small horizontal column jump, will be traversed quickly due to the vertical skipping.

Although the variant with 5 tables is especially fast, equivalent pixel position structures 110 may be constructed. E.g. in place of the three first tables, a single (sixth) table comprising (x,y)-tuples of the interesting pixels may be constructed, in which the (x,y) tuples are filled in consecutive groups corresponding to consecutive contour image 100 rows, i.e. consecutive y-values. To obtain the fourth and fifth table as described above, a binary search criterion may be used, until a tuple in the sixth table is found with the desired row value y. The correct indices for the leftmost and rightmost pixel in the vertical sector 301 can then be found by moving in the direction of increasing or decreasing index in the sixth table, until e.g. the tuple with the smallest x-value larger than XL is encountered.

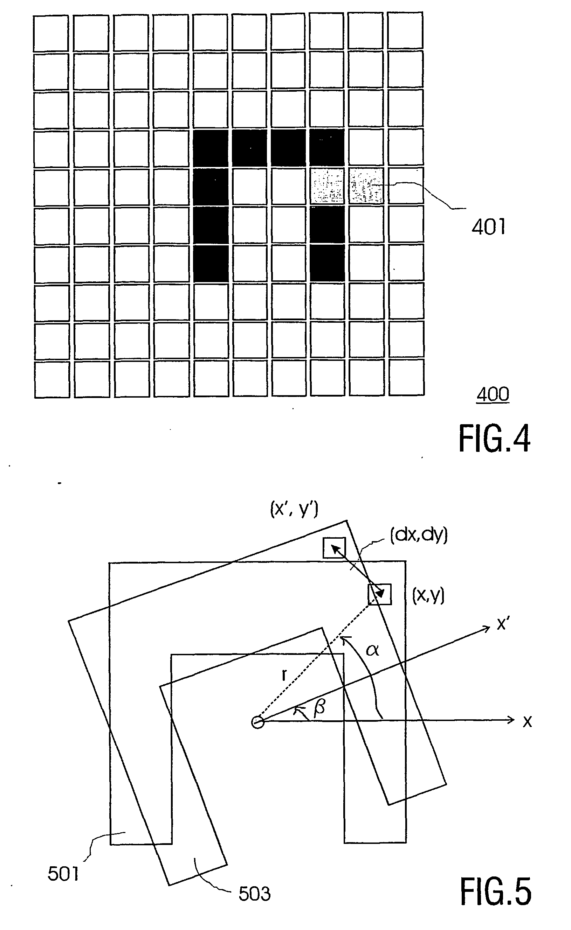

Instead of being binary as explained above, the contour image 100 may contain values not equal to zero or one, e.g. 0.5, as shown in Fig. 4. There may be several reasons for employing such contour images, e.g.:

- the contour image was obtained as a result of two different edge detection operations, a value of 1 indicating agreement between the two edge detectors on the presence of an contour at the particular pixel location, and a 0.5 indicating that only one of the two edge detectors detected the presence of an edge; or
- the image is obtained by applying a distance transform to a binary contour image 100, obtained as described above.

The latter example is useful in some applications. The match function is evaluated for all pixel values of the contour image 100 above a particular threshold value, e.g. 0.2 or 0. The threshold determines whether a pixel is of interest. The template may be binary or also have several values. A binary template is advantageous from a storage point of view, since if many different templates have to be stored and checked (e.g. rotated and scaled versions of a single object shape), a small memory may be insufficient for the storage if the pixel values of the template contour window 200 are integers or reals rather than binaries. Furthermore, there is a difference in the distribution of the number of operations, which may also be used advantageously. E.g. if the template to be matched is a two pixel line segment only two pixel comparisons have to be carried out for each evaluation position in case of a binary template (although with a distance transform on the contour image 100, typically more positions have to be verified), whereas several more comparisons have to be carried out for a distance transformed template. Which of the two options -distance transform on template or contour image- is the more economical is dependent on the shape of the template and the object content of the contour image 100, i.e. on the expected jumps of the region of interest 303. A speedup may be realized in case of a dynamically deciding algorithm also.

Increased processing speed can be obtained by exploiting the properties of the processor architecture (such as the single instruction multiple data of MMX). Instead of using a region of interest 303 which is as wide as the template contour window 200, the region of interest 303 is e.g. 8 pixels wider. Eight columns can then be checked for a matching template in parallel. The minimum horizontal jump is in this case eight columns.

In case contours of objects having different sizes, rotations, or slight perspective transformations have to be matched, a contour template matching strategy typically matches with a number of template contour windows 200 containing templates for each of the different combinations of a particular size, orientation, etc. This means that a large number of templates have to be stored, necessitating a large memory, and each of these templates have to matched.

According to this embodiment of the invention, for efficiently matching contours which are related by a geometrical transformation (e.g. rotation), only a subset of all these templates is stored. Fig. 5 shows an example of this principle for rotation. If one stores a template for each degree of change of orientation, most of the template is not that different anyway, only at the extremities the template contour windows 200 value may change considerably. So e.g. there is only a template contour window 200 for each rotation by a multiple of 10 degrees corresponding to a reference orientation. A template of intermediate orientation 503 - e.g. 9 degrees- can be matched by comparing pixel values of a neighboring template contour 501 (e.g. the one which is stored with the highest orientation angle lower than that of the intermediate orientation, e.g. in Fig. 5 zero degrees), with pixels in the contour image 100, not at the same position of those pixel values of a neighboring template contour 501, but at offsets (dx,dy), which can be calculated from the transformation. A similar result could be achieved by looking at offset positions in the template contour window 200 instead of the contour image 100, but in this case the template contour window 200 is typically made larger, and possibly generated with a distance transformation which introduces non zero pixel values for larger distances. E.g. the offsets (dx,dy) indicating which pixels of the contour image 100 to match in the example of Fig. 5 are:

$$dx = r[\cos(\alpha + \beta) - \cos(\alpha)]$$
$$dy = r[\sin(\alpha + \beta) - \sin(\alpha)]$$

[Eq. 5],

in which r is the distance to the rotation origin, and $\alpha$ is the angle compared to the vertical of a pixel in the template contour window 200, and $\beta$ is the orientation difference between the intermediate orientation and the orientation of the neighboring template contour 501. The offsets for different templates may be calculated in advance and stored as lookup tables. The overlap errors are compensated by the distance transform, i.e. there is a trade-off with the similarity of shapes to match. There is also a speed gain, since the matches for the subsampled orientations (casu quo the subsampled set of all geometrical deformations) already indicate roughly what the more precise orientation, size, etc. will be. In such a way fast search techniques may be employed.

In further embodiments matching may be on a subsampled contour image 100, typically after first smoothing, e.g. by means of a Gaussian filter. Or hierarchical matching in scale space may be used. Refinement or multistep matching strategies are also possible. E.g. objects may differ as to the presence of a small hook or notch. In a first step the object is localized, and in a second step the presence of the hook is verified in its expected position.

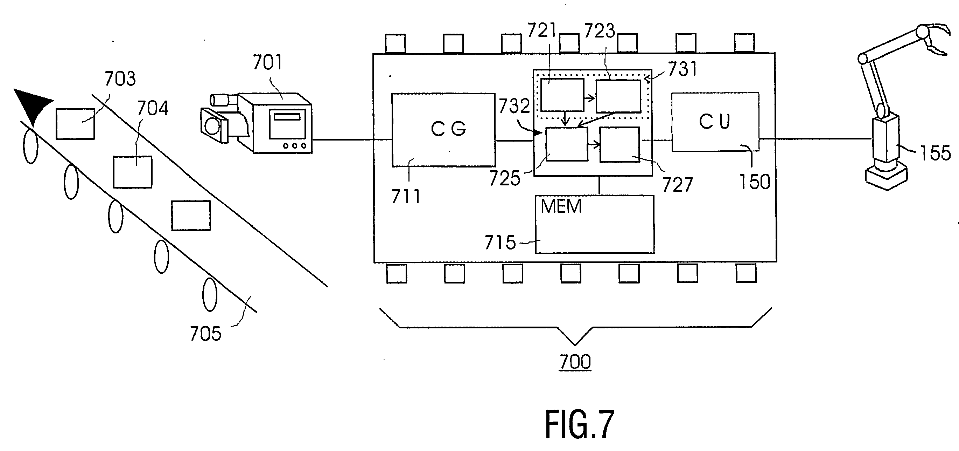

Fig. 7 shows an image processing device 731 for analyzing the object contour image 100. A first unit 721 is arranged to specify a position (xR, yR) on scan path 306 in the contour image 100 of a region of interest 303, e.g. as described above the first unit may generate consecutive positions along a column of the contour image 100. It is arranged to send this position information (or as in the example above at least an y coordinate of the current colunm to be scanned) to a second unit 723. The second unit is arranged to construct the first table 111, the fourth table 311, the fifth table 313, and if required in a particular realization corresponding to a corresponding method as described above also the second table 113 and the third table 115. The second unit 723 is connected to a memory 715 and arranged to store the tables in this memory 715. The memory is typically a memory chip, but may also be a detachable memory such as a diskette or a memory in a remote device connected through a network, so that the generated tables may be used by a separate image processing device for further processing.

An image processing device 732 for object detection may further comprise a matching unit 727 arranged to evaluate a match function taking as described above as arguments pixels in a region of interest 303 and pixels in a template contour window 200, and having access to the memory to store the results of matching. A decision unit 725 is arranged to have access to a current position along the scan path 306 or to a current region of interest 303, and has access to the tables in memory 725. The decision unit 725 is arranged to calculate a count 320 of a number of non-zero pixels inside the region of interest 303, by means of one or more of the methods described above. Depending on the value of the count, it is arranged to instruct the first unit 721 to jump to a next position on the scan path 306, e.g. 1 or more than 1 pixels lower, or to instruct the matching unit 727 to evaluate the match function for the current position of the region of interest 303.

A contour generation unit 711 is arranged to generate the contour image 100 from an image of grey value pixels, color pixels, or a mathematically or otherwise generated image. Ina typical application, the image is received from a camera 701.

A control unit is arranged to evaluate further functions on the basis of the object contour matching results obtained by the image processing device 732, and derive at least one signal S. This signal S may be output to e.g. a robot, which is instructed to pick up the detected object. In a security system the detected object may e.g. be a vehicle license plate, and the signal may be output to a barrier or an alarm.

All processing components, e.g. the image processing device 731, may be realized as hardware, e.g. an ASIC, an FPGA, or a dedicated circuit board, or software running on a dedicated or general purpose processor, e.g. inside a personal computer. The units shown may be realized on multiple or on a single physical device.

An example application shown in Fig. 7 is production line monitoring. Objects 703, 704 are traveling along on a conveyor belt 705. The image processing device 732 may e.g. be checking whether a component is cleanly soldered on a circuit board. Or, objects may be identified from their packaging.

The image processing device 732 may also be integrated in a smart camera, which is arranged to apply transformations, such as e.g. color correction or lens deformation correction based on the detected objects, e.g. a correction to the object only. Another application is a remote control comprising such a smart camera, as disclosed in WO 2004/047011.

A more consumer related apparatus is a television or computer with display, which is capable of processing the images received. E.g. logos or subtitles may be transformed in the television signal.

Under computer program product should be understood any physical realization of a collection of commands enabling a processor -generic or special purpose-, after a series of loading steps to get the commands into the processor, to execute any of the characteristic functions of an invention. In particular the computer program product may be realized as data on a carrier such as e.g. a disk or tape, data present in a memory, data traveling over a network connection -wired or wireless- , or program code on paper. Apart from program code, characteristic data required for the program may also be embodied as a computer program product.

It should be noted that the above-mentioned embodiments illustrate rather than limit the invention. Apart from combinations of elements of the invention as combined in the claims, other combinations of the elements are possible. Any combination of elements can be realized in a single dedicated element.

Any reference sign between parentheses in the claim is not intended for limiting the claim. The word "comprising" does not exclude the presence of elements or aspects not listed in a claim. The word "a" or "an" preceding an element does not exclude the presence of a plurality of such elements.

The invention can be implemented by means of hardware or by means of software running on a processor.

**Claims**

1. A method of analyzing a contour image (100) for object detection, comprising: constructing one or more tables with entries corresponding at least for each of a number of parallel lines of pixels to a first pixel of the contour image (100) lying on that parallel line having a value different from the predetermined value and a last pixel of the contour image (100) lying on that parallel line having a value different from the predetermined value,
**characterized by**

   - specifying a scan path(306) of positions (xR, yR) in the contour image (100), each position corresponding to a region of interest (303);
   - constructing a first table (111) containing for each pixel in the contour image (100) having a value different from the predetermined value at least one position coordinate (x);
   - constructing a fourth table (311) with entries corresponding to the position of the region of interest (303), containing at least for each parallel line of pixels, the line having a predetermined orientation and traversing the region of interest (303), an index (312) of an entry (121) in the first table (111), of, given a scan direction, the first pixel of the contour image (100) having a value different from the predetermined value, the first pixel lying on that parallel line and being inside the region of interest(303), the index referring to a sequence number of the first pixel in a scanning order; and
   - constructing a fifth table (313) with entries corresponding to the position of the region of interest (303), containing at least for each parallel line of pixels, the line having a predetermined orientation and traversing the region of interest (303), an index (312) of an entry(121) in the first table (111), of, given a scan direction, the last pixel of the contour image (100) having a value different from the predetermined value, the last pixel lying on that parallel line and being inside the region of interest(303), the index referring to a sequence number of the last pixel in the scanning order.

2. A method of analyzing a contour image (100) as claimed in claim 1, comprising:

   - specifying the scan path (306) as consecutive positions(xR, yR) running downwards along a column and subsequently jumping towards the next column;
   - constructing the first table (111) containing for each pixel in the contour image (100) having a value different from the predetermined value, at least one position coordinate (x);
   - constructing the fourth table (311) containing at least for each horizontal line of pixels traversing the region of interest(303), an index(312) of an entry(121) in the first table (111), of the leftmost pixel of the contour image (100) having a value different from the predetermined value, the leftmost pixel lying on the respective horizontal line and being inside the region of interest (303), the index referring to a sequence number of the leftmost pixel in the scanning order; and

- constructing the fifth table (311) containing at least for each horizontal line of pixels traversing the region of interest(303), an index(314) of an entry(121) in the first table (111), of the rightmost pixel of the contour image (100) having a value different from the predetermined value, the rightmost pixel lying on the respective horizontal line and being inside the region of interest (303), the index referring to a sequence number of the rightmost pixel in the scanning order.

3. A method of analyzing a contour image (100) as claimed in claim 2, comprising:

- constructing a second table (113) containing for substantially each horizontal line of the contour image (100) an index (123) of an entry(121) in the first table (111), of the leftmost pixel on the respective horizontal line of the contour image (100);
- constructing a third table (115) containing for substantially each horizontal line of the contour image (100) an index (125) of an entry(121) in the first table(111), of the rightmost pixel on the respective horizontal line of the contour image (100); and
- constructing the fourth table (311) and the fifth table (311) on the basis of the first table(111), the second table (113) and the third table (115).

4. A method as claimed in one of the claims 1,2, and 3, for detecting an object in a contour image (100), the method further comprising:

- calculating for consecutive positions along the scan path (306) a count (320) of a number of pixels inside the region of interest (303) having a value different from the predetermined value, on the basis of the fourth table (311) and the fifth table (313);
- evaluating a match function for obtaining an indication of a match between a template contour and the pixels of the contour image (100) present in the region of interest (303), taking as arguments pixels in the region of interest (303) and pixels in a template contour window (200) if the count (320) is greater than or equal to a predetermined pixel amount;
- performing a jump to a further position along the scan path (306) if the count (320) is smaller than a predetermined pixel amount.

5. A method as claimed in claim 4, for which the template contour to be verified is a geometrical transformation of a template contour in the template contour window (200), comprising: fetching for a pixel of the template contour window (200) a corresponding pixel in the contour image, at a position (x', y') which is determined by the position (x, y) of the pixel of the template contour window (200) and the geometrical transformation; and evaluating the match function on the basis of the similarity between the pixel of the template contour window (200) and the corresponding pixel.

6. A method for detecting an object in an image as claimed in one of the claims 1, 2, 3, 4 and 5, further comprising: - applying a contour detection to the image to obtain the contour image (100).

7. An image processing device (731) for analyzing a contour image (100) for object detection, comprising:

- a second unit arranged to construct and store in a memory (715) one or more tables with entries corresponding at least for each of a number of parallel lines of pixels to a first pixel of the contour image (100) lying on that parallel line having a value different from the predetermined value and a last pixel of the contour image (100) lying on that parallel line having a value different from the predetermined value, **characterized by**
- a first unit (721) arranged to specify a position (xR, yR) on a scan path (306) in the contour image (100) of a region of interest (303); and a second unit (723) arranged to construct and store in a memory (715):

a) a first table (111) containing for each pixel in the contour image (100) of value having a value different from the predetermined value, at least one position coordinate (x),

b) a fourth table (311) containing at least for each parallel line of pixels traversing the region of interest (303), an index (312) of an entry (121) in the first table (111), of, given a scan direction, the first pixel of the contour image (100) having a value different from the predetermined value, the first pixel lying on the respective parallel line and being inside the region of interest (303), the index referring to a sequence number of the first pixel in a scanning order., and

c) a fifth table (313) containing at least for each parallel line of pixels traversing the region of interest(303), an index(314) of an entry(121) in the first table (111), of, given a scan direction, the last pixel of the contour image (100) having a value different from the predetermined value, the last pixel lying on the respective parallel line and being inside the region of interest (303), the index referring to a sequence number of the last pixel in the scanning order.

8. An image processing device (732) for detecting an object in the contour image (100) comprising an image processing device(731) as claimed in claim 7, and further comprising:

- a matching unit (727) arranged to evaluate a match function taking as arguments pixels in a region of interest (303) and pixels in a template contour window (200); and
- a decision unit (725), arranged to calculate a count (320) of a number of pixels inside the region of interest (303), on the basis of the fourth table (311) and the fifth table (313) having a value different from the predetermined value, arranged to instruct the first unit (721) to jump to a further position along the scan path (306) if the count (320) is smaller than a predetermined pixel amount, and arranged to instruct the matching unit (727) to evaluate the match function for the current region of interest (303) if the count (320) is greater than or equal to the predetermined pixel amount.

9. An industrial vision apparatus (700), comprising an image processing device (731) as claimed in claim 7 or an image processing device (732) as claimed in claim 8, and further comprising: a contour generation unit (711) arranged to generate the contour image (100) from an image receivable from a camera (701) ; and a control unit (150), arranged to output a signal (S) in dependence on a result of the match function.

10. A smart camera, comprising an image processing device(731) as claimed in claim 7 or an image processing device (732) as claimed in claim 8, and further comprising: a contour generation unit arranged to generate the contour image (100) from an image captured by the camera(701) ; and an image treatment unit, arranged to apply an image transformation to a region of the image captured by the camera, determined on the basis of an object detected by the image processing device(731).

11. An image display, comprising an image processing device(731) as claimed in claim 7 or an image processing device (732) as claimed in claim 8, and further comprising:a contour generation unit arranged to generate the contour image (100) from an image received by the image display; and an image treatment unit, arranged to apply an image transformation to a region of the received image, determined on the basis of an object detected by the image processing device(731).

12. A security system comprising an industrial vision apparatus (700) as claimed in claim 9.

13. A computer program product, comprising program code to enable a processor to execute one of the methods 1 to 6.

**Patentansprüche**

1. Verfahren zum Analysieren eines Konturbildes (100) zur Objekterkennung, mit:

Erstellen einer oder mehrerer Tabellen mit Einträgen, die zumindest für jede Linie aus einer Anzahl paralleler Linien von Pixeln einem auf dieser parallelen Linie liegenden ersten Pixel des Konturbildes (100), das einen anderen Wert als den zuvor bestimmten Wert hat, und einem auf dieser parallelen Linie liegenden letzten Pixel des Konturbildes (100), das einen anderen Wert als den zuvor bestimmten Wert hat, entsprechen,

**gekennzeichnet durch**

- Spezifizieren eines Abtastpfades (306) von Positionen (xR, yR) in dem Konturbild (100), wobei jede Position einem interessierenden Bereich (303) entspricht;
- Erstellen einer ersten Tabelle (111), die für jedes Pixel in dem Konturbild (100), das einen anderen Wert als den zuvor bestimmten Wert hat, zumindest eine Positionskoordinate (x) enthält;
- Erstellen einer vierten Tabelle (311) mit Einträgen, die der Position des interessierenden Bereichs (303) entsprechen, welche zumindest für jede parallele Linie von Pixeln, wobei die Linie eine zuvor bestimmte Orientierung hat und den interessierenden Bereich (303) durchläuft, einen Index (312) eines Eintrages (121) - in der ersten Tabelle (111) - des bei gegebener Abtastrichtung ersten Pixels des Konturbildes (100), das einen anderen Wert als den zuvor bestimmten Wert hat, enthält, wobei das erste Pixel auf dieser parallelen Linie liegt und sich innerhalb des interessierenden Bereiches (303) befindet; wobei der Index sich auf eine Laufnummer des ersten Pixels in einer Abtastreihenfolge bezieht, und

- Erstellen einer fünften Tabelle (313) mit Einträgen, die der Position des interessierenden Bereichs (303) entsprechen, welche zumindest für jede parallele Linie von Pixeln, wobei die Linie eine zuvor bestimmte Orientierung hat und den interessierenden Bereich (303) durchläuft, einen Index (312) eines Eintrages (121) - in der ersten Tabelle (111) - des bei gegebener Abtastrichtung letzten Pixels des Konturbildes (100), das einen anderen Wert als den zuvor bestimmten Wert hat, enthält, wobei das letzte Pixel auf dieser parallelen Linie liegt und sich innerhalb des interessierenden Bereichs (303) befindet; wobei der Index sich auf eine Laufnummer des letzten Pixels in der Abtastreihenfolge bezieht.

2.  Verfahren zum Analysieren eines Konturbildes (100) nach Anspruch 1, mit:

    - Spezifizieren des Abtastpfades (306) als aufeinanderfolgende Positionen (xR, yR), der entlang einer Spalte nach unten verläuft und anschließend zur nächsten Spalte springt;
    - Erstellen der ersten Tabelle (111), die für jedes Pixel in dem Konturbild (100), das einen anderen Wert als den zuvor bestimmten Wert hat, zumindest eine Positionskoordinate (x) enthält;
    - Erstellen der vierten Tabelle (311), die zumindest für jede horizontale Linie von Pixeln, die den interessierenden Bereich (303) durchläuft, einen Index (312) eines Eintrages (121) - in der ersten Tabelle (111) - des am weitesten links liegenden Pixels des Konturbildes (100), das einen anderen Wert als den zuvor bestimmten Wert hat, enthält, wobei das am weitesten links liegende Pixel auf der jeweiligen horizontalen Linie liegt und sich innerhalb des interessierenden Bereiches (303) befindet, wobei der Index sich auf eine Laufnummer des am weitesten links liegende Pixels in der Abtastreihenfolge bezieht; und
    - Erstellen der fünften Tabelle (311), die zumindest für jede horizontale Linie von Pixeln, die den interessierenden Bereich (303) durchläuft, einen Index (314) eines Eintrages (121) - in der ersten Tabelle (111) - des am weitesten rechts liegenden Pixels des Konturbildes (100), das einen anderen Wert als den zuvor bestimmten Wert hat, enthält, wobei das am weitesten rechts liegende Pixel auf der jeweiligen horizontalen Linie liegt und sich innerhalb des interessierenden Bereiches (303) befindet, wobei der Index sich auf eine Laufnummer des am weitesten rechts liegenden Pixels in der Abtastreihenfolge bezieht.

3.  Verfahren zum Analysieren eines Konturbildes (100) nach Anspruch 2, mit:

    - Erstellen einer zweiten Tabelle (113), die für nahezu jede horizontale Linie des Konturbildes (100) einen Index (123) eines Eintrages (121) - in der ersten Tabelle (111) - des am weitesten links liegenden Pixels auf der jeweiligen horizontalen Linie des Konturbildes (100) enthält;
    - Erstellen einer dritten Tabelle (115), die für nahezu jede horizontale Linie des Konturbildes (100) einen Index (125) eines Eintrages (121) - in der ersten Tabelle (111) - des am weitesten rechts liegenden Pixels auf der jeweiligen horizontalen Linie des Konturbildes (100) enthält; und
    - Erstellen der vierten Tabelle (311) und der fünften Tabelle (311) auf Basis der ersten Tabelle (111), der zweiten Tabelle (113) und der dritten Tabelle (115).

4.  Verfahren nach einem der Ansprüche 1, 2 und 3, zum Erkennen eines Objekts in einem Konturbild (100), wobei das Verfahren weiterhin umfasst:

    - Berechnen, für aufeinanderfolgende Positionen entlang dem Abtastpfad (306), eines Zählwerts (320) einer Anzahl Pixel innerhalb des interessierenden Bereiches (303), die einen anderen Wert als den zuvor bestimmten Wert haben, auf Basis der vierten Tabelle (311) und der fünften Tabelle (313);
    - Auswerten einer Vergleichsfunktion, um einen Hinweis auf eine Übereinstimmung zwischen einer Schablonenkontur und den in dem interessierenden Bereich (303) vorhandenen Pixeln des Konturbildes (100) zu erhalten, wobei als Argumente Pixel in dem interessierenden Bereich (303) und Pixel in einem Schablonenkonturfenster (200) genommen werden, wenn der Zählwert (320) größer oder gleich einer zuvor bestimmten Pixelmenge ist;
    - Durchführen eines Sprunges zu einer weiteren Position entlang dem Abtastpfad (306), wenn der Zählwert (320) kleiner als eine zuvor bestimmte Pixelmenge ist.

5.  Verfahren nach Anspruch 4, für das die zu verifizierende Schablonenkontur eine geometrische Transformation einer Schablonenkontur in dem Schablonenkonturfenster (200) ist, mit: für ein Pixel des Schablonenkonturfensters (200) Holen eines entsprechenden Pixels in dem Konturbild, bei einer Position (x', y'), die durch die Position (x,y) des Pixels des Schablonenkonturfensters (200) und die geometrische Transformation bestimmt wird; und Auswerten der Vergleichsfunktion auf Basis der Ähnlichkeit zwischen dem Pixel des Schablonenkonturfensters (200) und dem entsprechenden Pixel.

6. Verfahren zum Erkennen eines Objekts in einem Bild nach einem der Ansprüche 1, 2, 3, 4 und 5, weiter umfassend:
   - Anwenden einer Konturerkennung auf das Bild, um das Konturbild (100) zu erhalten.

7. Bildverarbeitungseinrichtung (731) zum Analysieren eines Konturbildes (100) zur Objekterkennung, mit:

   - einer zweiten Einheit (723), die angeordnet ist, eine oder mehrere Tabellen mit Einträgen, die zumindest für jede Linie aus einer Anzahl paralleler Linien von Pixeln einem auf dieser parallelen Linie liegenden ersten Pixel des Konturbildes (100), das einen anderen Wert als den zuvor bestimmten Wert hat, und einem auf dieser parallelen Linie liegenden letzten Pixel des Konturbildes (100), das einen anderen Wert als den zuvor bestimmten Wert hat, entsprechen, zu erstellen und in einem Speicher (715) zu speichern,

   **gekennzeichnet durch**

   - eine erste Einheit (721), die zum Spezifizieren einer Position (xR, yR) auf einem Abtastpfad (306) in dem Konturbild (100) eines interessierenden Bereiches (303) angeordnet ist; und eine zweite Einheit (723), die angeordnet ist, zu erstellen und in einem Speicher (715) zu speichern:

   a) eine erste Tabelle (111), die für jedes Pixel in dem Konturbild (100) mit einem anderen Wert als dem zuvor bestimmten Wert zumindest eine Positionskoordinate (x) enthält,
   b) eine vierte Tabelle (311), die zumindest für jede parallele Linie von Pixeln, die den interessierenden Bereich (303) durchläuft, einen Index (312) eines Eintrages (121) - in der ersten Tabelle (111) - des bei gegebener Abtastrichtung ersten Pixels des Konturbildes (100), das einen anderen Wert als den zuvor bestimmten Wert hat, enthält, wobei das erste Pixel auf der jeweiligen parallelen Linie liegt und sich innerhalb des interessierenden Bereiches (303) befindet; wobei der Index sich auf eine Laufnummer des ersten Pixels in einer Abtastreihenfolge bezieht, und
   c) eine fünfte Tabelle (313), die zumindest für jede parallele Linie von Pixeln, die den interessierenden Bereich (303) durchläuft, einen Index (314) eines Eintrages (121) - in der ersten Tabelle (111) - des bei gegebener Abtastrichtung letzten Pixels des Konturbildes (100), das einen anderen Wert als den zuvor bestimmten Wert hat, enthält, wobei das letzte Pixel auf der jeweiligen parallelen Linie liegt und sich innerhalb des interessierenden Bereichs (303) befindet; wobei der Index sich auf eine Laufnummer des letzten Pixels in der Abtastreihenfolge bezieht.

8. Bildverarbeitungseinrichtung (732) zum Erkennen eines Objekts in dem Konturbild (100) mit einer Bildverarbeitungseinrichtung (731) nach Anspruch 7, und weiter mit:

   - einer Gleichheitsprüfungseinheit (727), die zum Auswerten einer Vergleichsfunktion angeordnet ist, die als Argumente Pixel in einem interessierenden Bereich (303) und Pixel in einem Schablonenkonturfenster (200) nimmt; und
   - einer Entscheidungseinheit (725), die angeordnet ist, einen Zählwert (320) einer Anzahl Pixel innerhalb des interessierenden Bereiches (303), die einen anderen Wert als den zuvor bestimmten Wert haben, auf Basis der vierten Tabelle (311) und der fünften Tabelle (313) zu berechnen; die angeordnet ist, die erste Einheit (721) anzuweisen, zu einer weiteren Position entlang dem Abtastpfad (306) zu springen, wenn der Zählwert (320) kleiner ist als eine zuvor bestimmte Pixelmenge, und die angeordnet ist, die Gleichheitsprüfungseinheit (727) anzuweisen, die Vergleichsfunktion für den aktuellen interessierenden Bereich (303) auszuwerten, wenn der Zählwert (320) größer oder gleich der zuvor bestimmten Pixelmenge ist.

9. Industrielles Vision-Gerät (700), mit einer Bildverarbeitungseinrichtung (731) nach Anspruch 7 oder einer Bildverarbeitungseinrichtung (732) nach Anspruch 8, und weiter mit: einer Konturerzeugungseinheit (711), die angeordnet ist, das Konturbild (100) aus einem Bild zu erzeugen, das aus einer Kamera (701) erhalten werden kann; und einer Steuereinheit (150), die angeordnet ist, in Abhängigkeit von einem Ergebnis der Vergleichsfunktion ein Signal (S) auszugeben.

**10.** Intelligente Kamera, mit einer Bildverarbeitungseinrichtung (731) nach Anspruch 7 oder einer Bildverarbeitungseinrichtung (732) nach Anspruch 8, und weiter mit: einer Konturerzeugungseinheit, die angeordnet ist, das Konturbild (100) aus einem Bild zu erzeugen, das mit der Kamera (701) aufgenommen worden ist; und einer Bildbearbeitungseinheit, die angeordnet ist, eine Bildtransformation auf einen Bereich des von der Kamera aufgenommenen Bildes anzuwenden, der auf Basis eines von der Bildverarbeitungseinrichtung (731) erkannten Objektes bestimmt worden ist.

**11.** Bild-Display, mit einer Bildverarbeitungseinrichtung (731) nach Anspruch 7 oder einer Bildverarbeitungseinrichtung (732) nach Anspruch 8, und weiter mit: einer Konturerzeugungseinheit, die angeordnet ist, das Konturbild (100) aus einem Bild zu erzeugen, das mit dem Bild-Display erhalten worden ist; und einer Bildbearbeitungseinheit, die angeordnet ist, eine Bildtransformation auf einen Bereich des erhaltenen Bildes anzuwenden, der auf Basis eines von der Bildverarbeitungseinrichtung (731) erkannten Objektes bestimmt worden ist.

**12.** Sicherheitssystem mit einem industriellen Vision-Gerät (700) nach Anspruch 9.

**13.** Computerprogrammprodukt, das Programmcode umfasst, um einen Prozessor zu befähigen, eines der Verfahren 1 bis 6 auszuführen.

**Revendications**

**1.** Procédé d'analyse d'image de contour (100) pour la détection d'objet, comportant:

- la construction d'une ou de plusieurs tables avec des entrées correspondant au moins, pour chaque ligne d'un certain nombre de lignes parallèles de pixels, à un premier pixel de l'image de contour (100) se trouvant sur cette ligne parallèle ayant une valeur différente de la valeur prédéterminée et à un dernier pixel de l'image de contour (100) se trouvant sur cette ligne parallèle ayant une valeur différente de la valeur prédéterminée,

**caractérisé par**

- la spécification d'un chemin de balayage (306) de positions (xR, yR) dans l'image de contour (100), chaque position correspondant à une région d'intérêt (303);
- la construction d'une première table (111) contenant pour chaque pixel dans l'image de contour (100) ayant une valeur différente de la valeur prédéterminée au moins une coordonnée de position (x);
- la construction d'une quatrième table (311) avec des entrées correspondant à la position de la région d'intérêt (303), contenant au moins, pour chaque ligne parallèle de pixels, la ligne ayant une orientation prédéterminée et traversant la région d'intérêt (303), un index (312) d'une entrée (121) dans la première table (111), une direction de balayage étant donnée, du premier pixel de l'image de contour (100) ayant une valeur différente de la valeur prédéterminée, le premier pixel se trouvant sur cette ligne parallèle et étant à l'intérieur de la région d'intérêt (303), l'index faisant référence à un numéro de séquence du premier pixel dans un ordre de balayage; et
- la construction d'une cinquième table (313) avec des entrées correspondant à la position de la région d'intérêt (303), contenant au moins, pour chaque ligne parallèle de pixels, la ligne ayant une orientation prédéterminée et traversant la région d'intérêt (303), un index (312) d'une entrée (121) dans la première table (111), une direction de balayage étant donnée, du dernier pixel de l'image de contour (100) ayant une valeur différente de la valeur prédéterminée, le dernier pixel se trouvant sur cette ligne parallèle et étant à l'intérieur de la région d'intérêt (303), l'index faisant référence à un numéro de séquence du dernier pixel dans l'ordre de balayage.

**2.** Procédé d'analyse d'une image de contour (100) selon la revendication 1, comportant:

- la spécification du chemin de balayage (306) comme des positions consécutives (xR, yR) se dirigeant vers le bas le long d'une colonne et sautant par la suite à la colonne suivante;
- la construction de la première table (111) contenant, pour chaque pixel dans l'image de contour (100) ayant une valeur différente de la valeur prédéterminée, au moins une coordonnée de position (x);
- la construction d'une quatrième table (311) contenant au moins, pour chaque ligne horizontale de pixels traversant la région d'intérêt (303), un index (312) d'une entrée (121) dans la première table (111), du pixel le plus à gauche de l'image de contour (100) ayant une valeur différente de la valeur prédéterminée, le pixel le plus à gauche se trouvant sur la ligne horizontale respective et étant à l'intérieur de la région d'intérêt (303), l'index faisant référence à un numéro de séquence du pixel le plus à gauche dans l'ordre de balayage; et

- la construction d'une cinquième table (313) contenant au moins, pour chaque ligne horizontale de pixels traversant la région d'intérêt (303), un index (314) d'une entrée (121) dans la première table (111), du pixel le plus à droite de l'image de contour (100) ayant une valeur différente de la valeur prédéterminée, le pixel le plus à droite se trouvant sur la ligne horizontale respective et étant à l'intérieur de la région d'intérêt (303), l'index faisant référence à un numéro de séquence du pixel le plus à droite dans l'ordre de balayage.

**3.** Procédé d'analyse d'une image de contour (100) selon la revendication 2, comportant:

- la construction d'une deuxième table (113) contenant, pour pratiquement chaque ligne horizontale de l'image de contour (100), un index (123) d'une entrée (121) dans la première table (111), du pixel le plus à gauche sur la ligne horizontale respective de l'image de contour (100);
- la construction d'une troisième table (115) contenant, pour pratiquement chaque ligne horizontale de l'image de contour (100), un index (125) d'une entrée (121) dans la première table (111), du pixel le plus à droite sur la ligne horizontale respective de l'image de contour (100); et
- la construction de la quatrième table (311) et de la cinquième table (313) sur la base de la première table (111), de la deuxième table (113) et de la troisième table (115).

**4.** Procédé selon l'une des revendications 1, 2 et 3, permettant de détecter un objet dans une image de contour (100), le procédé comportant en outre:

- le calcul, pour des positions consécutives le long du chemin de balayage (306), d'un compte (320) d'un certain nombre de pixels à l'intérieur de la région d'intérêt (303) ayant une valeur différente de la valeur prédéterminée, sur la base de la quatrième table (311) et de la cinquième table (313);
- l'évaluation d'une fonction de correspondance permettant d'obtenir une indication d'une correspondance entre un contour modèle et les pixels de l'image de contour (100) présents dans la région d'intérêt (303), prenant comme arguments des pixels dans la région d'intérêt (303) et des pixels dans une fenêtre de contour modèle (200) si le compte (320) est plus grand ou égal à une quantité de pixels prédéterminée;
- la réalisation d'un saut à une position supplémentaire le long du chemin de balayage (306) si le compte (320) est plus petit qu'une quantité de pixels prédéterminée.

**5.** Procédé selon la revendication 4, pour lequel le contour modèle à vérifier est une transformation géométrique d'un contour modèle dans la fenêtre de contour modèle (200), comportant: la recherche, pour un pixel de la fenêtre de contour modèle (200), d'un pixel correspondant dans l'image de contour, à une position (x', y') qui est déterminée par la position (x, y) du pixel de la fenêtre de contour modèle (200) et la transformation géométrique; et l'évaluation de la fonction de correspondance sur la base de la similarité entre le pixel de la fenêtre de contour modèle (200) et le pixel correspondant.

**6.** Procédé pour la détection d'un objet dans une image selon l'une des revendications 1, 2, 3, 4 et 5, comportant en outre:

- l'application d'une détection de contour à l'image pour obtenir l'image de contour (100).

**7.** Dispositif de traitement d'image (731) permettant d'analyser une image de contour (100) pour la détection d'objet, comportant:

- une deuxième unité disposée pour construire et stocker dans une mémoire (715) une ou plusieurs tables avec des entrées correspondant au moins, pour chaque ligne d'un certain nombre de lignes parallèles de pixels, à un premier pixel de l'image de contour (100) se trouvant sur cette ligne parallèle ayant une valeur différente de la valeur prédéterminée et à un dernier pixel de l'image de contour (100) se trouvant sur cette ligne parallèle ayant une valeur différente de la valeur prédéterminée, **caractérisé par**
- une première unité (721) disposée pour spécifier une position (xR, yR) sur un chemin de balayage (306) dans l'image de contour (100) d'une région d'intérêt (303); et une deuxième unité (723) disposée pour construire et stocker dans une mémoire (715):

a) une première table (111) contenant, pour chaque pixel dans l'image de contour (100) de valeur ayant une valeur différente de la valeur prédéterminée, au moins une coordonnée de position (x),
b) une quatrième table (311) contenant au moins, pour chaque ligne parallèle de pixels traversant la région d'intérêt (303), un index (312) d'une entrée (121) dans la première table (111), une direction de balayage étant donnée, du premier pixel de l'image de contour (100) ayant une valeur différente de la valeur prédéterminée, le premier pixel se trouvant sur la ligne parallèle respective et étant à l'intérieur de la région d'intérêt (303), l'index faisant référence à un numéro de séquence du premier pixel dans un ordre de balayage, et

c) une cinquième table (313) contenant au moins, pour chaque ligne parallèle de pixels traversant la région d'intérêt (303), un index (314) d'une entrée (121) dans la première table (111), une direction de balayage étant donnée, du dernier pixel de l'image de contour (100) ayant une valeur différente de la valeur prédéterminée, le dernier pixel se trouvant sur la ligne parallèle respective et étant à l'intérieur de la région d'intérêt (303), l'index faisant référence à un numéro de séquence du dernier pixel dans l'ordre de balayage.

8. Dispositif de traitement d'image (732) permettant de détecter un objet dans l'image de contour (100), comportant un dispositif de traitement d'image (731) selon la revendication 7, et comportant en outre:

- une unité de correspondance (727) disposée pour évaluer une fonction de correspondance prenant comme arguments des pixels dans une région d'intérêt (303) et des pixels dans une fenêtre de contour modèle (200); et
- une unité de décision (725), disposée pour calculer un compte (320) d'un nombre de pixels à l'intérieur de la région d'intérêt (303), sur la base de la quatrième table (311) et de la cinquième table (313), ayant une valeur différente de la valeur prédéterminée, disposée pour donner instruction à la première unité (721) de sauter à une position supplémentaire le long du chemin de balayage (306) si le compte (320) est plus petit qu'une quantité de pixels prédéterminée, et disposée pour donner instruction à l'unité de correspondance (727) d'évaluer la fonction de correspondance pour la région d'intérêt courante (303) si le compte (320) est plus grand ou égal à la quantité de pixels prédéterminée.

9. Appareil de vision industriel (700), comportant un dispositif de traitement d'image (731) selon la revendication 7 ou un dispositif de traitement d'image (732) selon la revendication 8, et comportant en outre: une unité de génération de contour (711) disposée pour générer l'image de contour (100) à partir d'une image recevable d'une caméra (701); et une unité de commande (150), disposée pour produire en sortie un signal (S) en fonction d'un résultat de la fonction de correspondance.

10. Caméra intelligente, comportant un dispositif de traitement d'image (731) selon la revendication 7 ou un dispositif de traitement d'image (732) selon la revendication 8, et comportant en outre: une unité de génération de contour disposée pour générer l'image de contour (100) à partir d'une image acquise par la caméra (701); et une unité de traitement d'image, disposée pour appliquer une transformation d'image à une région de l'image acquise par la caméra, déterminée sur la base d'un objet détecté par le dispositif de traitement d'image (731).

11. Dispositif d'affichage, comportant un dispositif de traitement d'image (731) selon la revendication 7 ou un dispositif de traitement d'image (732) selon la revendication 8, et comportant en outre: une unité de génération de contour disposée pour générer l'image de contour (100) à partir d'une image reçue par l'affichage d'image; et une unité de traitement d'image, disposée pour appliquer une transformation d'image à une région de l'image reçue, déterminée sur la base d'un objet détecté par le dispositif de traitement d'image (731).

12. Système de sécurité comportant un appareil de vision industriel (700) selon la revendication 9.

13. Produit programme informatique, comportant un code de programme qui permet à un processeur d'exécuter l'un des procédés 1 à 6.

FIG.1a

100

LxP: {10,11,12,13,10,13,10,13,10,13}

11x

xL {NaN, NaN, ..., NaN, 0,4,6,8,NaN,NaN,Nan}

11x

xR {NaN, NaN, ..., NaN, 3,5,7,9,NaN,NaN,Nan}

FIG.1b

8

8

200          201          203

# FIG.2

FIG.3a

FIG.3b

FIG.3c

401

400

FIG.4

(x', y')

(dx,dy)

(x,y)

x'

α

r

β

x

501

503

FIG.5

FIG.6

FIG.7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4155072 A

- WO 2004047011 A

**Non-patent literature cited in the description**

- **M. MERTENS ; H. SAHLI ; J. CORNELIS.** A robust nonlinear segment-edge finder. *Proc. of the 1997 IEEE Workshop on Nonlinear Signal and Image Processing*